Europäisches Patentamt

European Patent Office

Office européen des brevets

(19)

(11) Veröffentlichungsnummer: **0 322 522 B1**

(12) **EUROPÄISCHE PATENTSCHRIFT**

(45) Veröffentlichungstag der Patentschrift: **03.06.92**

(51) Int. Cl.5: **F16J 15/10, B64C 1/14**

(21) Anmeldenummer: **88116785.2**

(22) Anmeldetag: **10.10.88**

(54) **Dichtband.**

(30) Priorität: **30.12.87 DE 8717108 U**

(43) Veröffentlichungstag der Anmeldung:
**05.07.89 Patentblatt 89/27**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**DE-A- 2 919 958**
**FR-A- 979 525**

(73) Patentinhaber: **W.L. Gore & Associates GmbH**
**Hermann-Oberth-Strasse 22**
**W-8011 Putzbrunn(DE)**

(72) Erfinder: **Forrest, Patrick**
**Lindenstrasse 15**
**W-8832 Weissenburg(DE)**
Erfinder: **Tillmanns, Ralf**
**Am Einsiedel 44**
**W-8835 Pleinfeld(DE)**
Erfinder: **Walter, Wolfgang**
**Sonnbergstrasse 14**
**W-8000 München 80(DE)**

(74) Vertreter: **Klunker . Schmitt-Nilson . Hirsch**
**Winzererstrasse 106**
**W-8000 München 40(DE)**

## Beschreibung

Die Erfindung betrifft ein Dichtband zum Abdichten der Fugen und Spalten zwischen dem Rand einer Öffnung in einem Flugzeugrumpf und dem die Öffnung verschließendem Deckel in Form eines Profilstücks mit einem - jeweils im Querschnitt - relativ breiten Flachteil und einem schmaleren, verdickten Wulstteil.

Damit die in einem Flugzeugrumpf aufgenommenen Teile (Instrumente, Leitungen und dergleichen) für Wartungs- und Reparaturarbeiten, wenn nicht von innen her, so doch von außen zugänglich sind, werden in dem Rumpf üblicherweise Öffnungen vorgesehen, die vor Inbetriebnahme des Flugzeugs von passenden Deckeln verschlossen werden. Um diese wasserdicht zu verschließen, verwendete man bislang sogenannte Selbstformdichtungen, das sind Zwei-Komponenten-Dichtungen, die angemischt und dann sehr dünn auf die Dichtfläche aufgetragen werden, bevor der Deckel angeschraubt oder anderweitig festgezogen wird.

Zur Prüfung der Dichtigkeit wird das Ausreagieren der Dichtmasse abgewartet, bevor das Flugzeug zum Beispiel mit einer Berieselungsanlage auf Dichtigkeit geprüft wird. Bei Undichtigkeiten muß der Deckel wieder abgeschraubt, die Dichtmasse entfernt und der Dichtungsvorgang wiederholt werden. Das Ausreagieren der Dichtungsmasse benötigt etwa 12 Stunden. Damit ist das Abdichten der Öffnungen sehr zeitraubend, wobei insbesondere stört, daß die Dichtungen nicht von gleichbleibender Qualität sind.

Unproblematisch ist auch nicht die Beseitigung der alten, unbrauchbaren Dichtungen; denn diese müssen als Sondermüll behandelt werden.

Die DE-A- 2 919 958 zeigt in Übereinstimmung mit dem Oberbegriff des Anspruchs 1 eine Flanschdichtung, die derart ausgebildet ist, daß sich der Flachteil nur begrenzt verformen läßt, während der Wulstteil elastisch oder plastisch nachgiebig ist. Speziell sollen Flachteil und Wulstteil aus zwei Werkstoffen bestehen, von denen der eine, elastische oder plastische Werkstoff gegen Korrosion durch das abzudichtende Medium beständig ist, während der andere Werkstoff widerstandsfähig gegenüber mechanischen Belastungen ist. Als Materialkombinationen werden Elastomere unterschiedlicher Härte verschiedener Basis oder Elastomere mit Kunststoffen, z. B. PTFE, angegeben.

Nun sind derartige Flanschdichtungen aus zwei verschiedenen Werkstoffen in der Herstellung teuer. Wenn, wie es bei der bekannten Dichtung der Fall ist, der Flachteil nur sehr begrenzt verformen läßt, eignen sich derartige Dichtungen kaum zum Abdichten der Fugen und Spalten zwischen einem Öffnungsrand in einem Flugzeugrumpf und dem dazugehörigen Deckelrand.

Der Erfindung liegt die Aufgabe zugrunde, ein Dichtband der eingangs genannten Art anzugeben, das auch bei unregelmäßigen Lücken und Spalten zwischen Öffnungsrand und Deckelrand überall eine gleichmäßig gute Abdichtung gewährleistet.

Gelöst wird diese Aufgabe durch die Erfindung dadurch, daß das einstückige Profil aus expandiertem PTFE besteht.

Der Wulst befindet sich im montierten Zustand des Dichtbandes an der Stelle des Randes der Öffnung, der der größten Lücke zwischen Öffnungsrand und Deckelrand entspricht.

Dadurch, daß das Profilstück aus expandiertem PTFE besteht, besitzt das Dichtband bei guten Dichtungseigenschaften eine relativ hohe Kompressibilität, so daß auch bei unregelmäßigen Lücken und Spalten zwischen Öffnungsrand und Deckelrand überall eine gleichmäßig gute Abdichtung erreicht wird.

Mit dem Dichtband können Öffnungen in kurzer Zeit mit Dichtungen ausgestattet werden. Die Deckel-Befestigungsmittel, z. B. Schrauben, können mühelos eingeschraubt werden. Dazu wird das Dichtband an den betreffenden Bohrungsstellen einfach mit einem spitzen Werkzeug durchstochen. Das expandierte PTFE legt sich an die Schraube an und gewährleistet auch an diesen empfindlichen Stellen Dichtigkeit.

Im folgenden werden Ausführungsbeispiele der Erfindung anhand der Zeichnung näher erläutert. Es zeigen:

Fig. 1      eine Querschnittansicht eines Dichtbands, und

Fig. 2      einen Randbereich einer von einem Deckel abgedichteten verschlossenen Öffnung in einem Flugzeugrumpf.

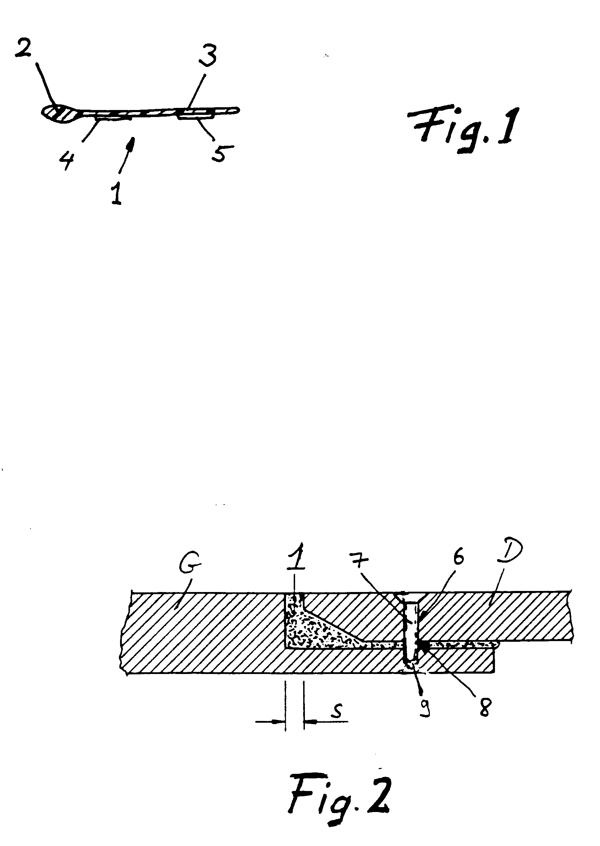

Nach Fig. 1 besteht ein Dichtband 1 aus einem einstückigen Profilstück aus expandiertem Polytetrafluorethylen (PTFE). Das Profilstück besitzt einen relativ breiten Flachteil 3, der ca. 3-4 cm breit und ca. 1 mm dick ist, sowie einen schmaleren, verdickten Wulstteil 2 mit einer Dicke von etwa 3,5 mm.

Auf der Unterseite des Flachteils 3 befinden sich Selbstklebebänder 4 und 5, mit denen das Dichtband in einem abzudichtendem Bereich festgeklebt wird.

Wie Fig. 2 zeigt, wird die Öffnung eines Flugzeugrumpfes G von einem Deckel D verschlossen, wobei der Rand des Deckels in einigem Abstand vom Öffnungrand des Flugzeugrumpfs G beabstandet ist und so mit einer in der Bohrung 6 des Deckels sitzenden Schraube 7 befestigt ist, daß die Außenseite des Flugzeugsrumpfs G mit der Außenseite des Deckels D fluchtet. In dem Spalt zwischen Deckelrand und Öffnungsrand befindet sich das Dichtband 1, welches aufgrund seiner besonderen Eigenschaften seine Form so verändert, daß es die Lücke zwischen Deckelrand und Öffnungsrand vollständig ausfüllt.

Die Breite S des Spalts unterliegt Schwankungen, denen sich das Dichtband gut anpaßt. Die in einer Bohrung 9 im Öffnungsrand eingreifende Schraube 7 durchsetzt ein Loch 8 des Dichtbands 1. Das Loch 8 wird nach dem Anbringen des Dichtbands am Öffnungsrand mit einem spitzen Werkzeug geschaffen, indem das Dichtband einfach durchstoßen wird.

Herstellungsbedingt besitzt das aus PTFE bestehende Dichtband 1 besondere Dehnungsfähigkeit und eine besondere Zugfestigkeit, wodurch das Dichtband besonders gute Dichtungseigenschaft besitzt. Der Werkstoff PTFE hat bei dem erfindungsgemäßen Dichtband, d.h. bei dem speziellen Anwendungsfall des Abdichtens der Spalten und Fugen zwischen Öffnungen und Deckeln von Flugzeugrümpfen, den Vorteil, daß aufgrund seiner absoluten Chemikalienbeständigkeit weder Flugzeugbenzin (Kerosin) noch agressive Säuren und Öle, wie sie üblicherweise in der Flugzeughydraulik verwendet werden, die Dichtung angreifen können.

Das Herstellen des neuerungsgemäßen Dichtbandes 1 erfolgt durch Extrudieren des Profils durch eine Formdüse. Somit entspricht die Herstellung des Dichtbandes im wesentlichen der Herstellung von Folienteilen aus entsprechendem Material.

## Patentansprüche

1. Dichtband zum Abdichten der Fugen und Spalten zwischen dem Rand einer Öffnung in einem Flugzeugrumpf und dem die Öffnung verschließenden Deckel, in Form eines Profilstücks mit einem - jeweils im Querschnitt - relativ breiten Flachteil (3) und einem schmaleren, verdickten Wulstteil (2), dadurch **gekennzeichnet,** daß das einstückige Profilstück aus expandiertem PTFE (Polytetrafluorethylen) besteht.

2. Dichtband nach Anspruch 1, dadurch **gekennzeichnet,** daß der Wulstteil einen runden, eckigen oder etwa elliptischen Querschnitt hat.

3. Dichtband nach einem der Ansprüche 1 und 2, dadurch **gekennzeichnet,** daß die Dicke des Flachteils (3) zwischen 0,3 und 1,5 mm beträgt.

4. Dichtband nach einem der Ansprüche 1 bis 3, dadurch **gekennzeichnet,** daß der Wulstteil 1 bis 5 mm dick ist.

## Claims

1. Sealing strip for sealing the joints and fissures between the edge of an opening in an aircraft fuselage and the lid closing the opening, in the form of a profiled piece, having - in each case in cross-section - a relatively wide flat part (3) and a narrower, thickened bead part (2), characterized in that the one-piece profiled piece is of expanded PTFE (polytetrafluoroethylene).

2. Sealing strip according to Claim 1, characterized in that the bead part has a round, rectangular or approximately elliptical cross-section.

3. Sealing strip according to one of Claims 1 and 2, characterized in that the thickness of the flat part (3) is between 0.3 and 1.5 mm.

4. Sealing strip according to one of Claims 1 to 3, characterized in that the bead part is 1 to 5 mm thick.

## Revendications

1. Bande d'étanchéité pour assurer l'étanchéité des joints des fentes entre le bord d'une ouverture dans une coque d'avion et le couvercle qui obture l'ouverture, sous forme d'un élément profilé présentant une partie plate (3) relativement large - chaque fois en coupe - et une partie formant bourrelet (2), plus étroite et épaissie, bande caractérisée par le fait que l'élément profilé, en une seule pièce, est constitué de PTFE (polytétrafluoroéthylène) expansé.

2. Bande d'étanchéité selon la revendication 1, caractérisée par le fait que la partie formant bourrelet a une section ronde, anguleuse ou à peu près elliptique.

3. Bande d'étanchéité selon l'une des revendications 1 et 2, caractérisée par le fait que l'épaisseur de la partie plate (3) se situe entre 0,3 et 1,5 mm.

4. Bande d'étanchéité selon l'une des revendications 1 à 3, caractérisée apr le fait que la partie formant bourrelet a une épaisseur de 1 à 5 mm.

Fig.1

Fig.2